# FASCICULE DE BREVET EUROPEEN

(11) **EP 4 440 896 B1**
(45) Date de publication et mention de la délivrance du brevet: **23.07.2025**
(21) Numéro de dépôt: 22813661.0
(22) Date de dépôt: 27.10.2022
(51) Int. Cl.: B60W 30/16, B60W 40/04

(54) **PROCÉDÉ ET DISPOSITIF DE CONTRÔLE D'UN SYSTÈME DE RÉGULATION ADAPTATIVE DE VITESSE D'UN VÉHICULE**
VERFAHREN UND VORRICHTUNG ZUR STEUERUNG EINES ADAPTIVEN GESCHWINDIGKEITSREGELSYSTEMS EINES FAHRZEUGS
METHOD AND DEVICE FOR CONTROLLING AN ADAPTIVE CRUISE CONTROL SYSTEM OF A VEHICLE

(30) Priorité: 02.12.2021 FR 2112827
(43) Date de publication de la demande: 09.10.2024
(73) Titulaire: Stellantis Auto SAS, 78300 Poissy (FR)
(72) Inventeur: VIVET, Luc, 75016 PARIS 16 (FR); TOUIL, Lhassane, Kenitra, 14000 (MA); NACIRI, Yassine, EL JADIDA, 24020 (MA); REY, Alexis, 92210 ST CLOUD (FR)
(74) Mandataire: ESIP
(86) Numéro de dépôt international: PCT/FR2022/052042
(87) Numéro de publication internationale: WO 2023/099828

(56) Documents cités:
- DE-A1- 102005 007 802
- DE-A1- 102011 102 429
- FR-A1- 3 089 926

## Description

La présente invention revendique la priorité de la demande française 2112827 déposée le 02.12.2021.

### Domaine technique

La présente invention concerne les procédés et dispositifs de contrôle d'un système de régulation adaptative de vitesse d'un véhicule, notamment un véhicule automobile. La présente invention concerne également un procédé et un dispositif de régulation de vitesse d'un véhicule. La présente invention concerne également un procédé et un dispositif de contrôle d'un véhicule, notamment un véhicule autonome.

### Arrière-plan technologique

Certains véhicules contemporains sont équipés de fonctions ou système(s) ou d'aide à la conduite, dit ADAS (de l'anglais « Advanced Driver-Assistance System » ou en français « Système d'aide à la conduite avancé »).

Parmi ces systèmes, le système de régulation adaptative de vitesse, dit ACC (de l'anglais « Adaptive Cruise Control ») a pour fonction première la régulation automatiquement, de façon adaptative, de la vitesse des véhicules qui en sont équipés en fonction de leur environnement. Un tel système ACC détermine une ou plusieurs consignes d'accélération en fonction d'une consigne de vitesse et d'informations relatives à l'environnement du véhicule, la ou les consignes d'accélération étant propres à réguler la vitesse du véhicule de façon adaptative, c'est-à-dire en tenant compte de l'environnement du véhicule.

Ces informations d'environnement correspondent par exemple à la distance entre le véhicule équipé du système ACC et un véhicule circulant devant, à la vitesse (par exemple relative) du véhicule circulant devant, à l'accélération du véhicule circulant devant et/ou à une vitesse limite réglementaire. Un tel véhicule est appelé véhicule cible ou objet cible du système ACC. La ou les consignes d'accélération sont par exemple déterminées à partir d'une loi de commande basée sur des estimations du couple fourni par un groupe motopropulseur (par exemple un moteur thermique ou électrique) à une ou plusieurs roues du véhicule et de l'accélération courante du véhicule.

Les informations d'environnement d'un véhicule sont par exemple obtenues de capteurs embarqués dans le véhicule, tels que des radars par exemple. Ces informations sont particulièrement importantes pour un véhicule, par exemple pour améliorer la sécurité du véhicule en prenant en compte l'environnement qui l'entoure, notamment les autres véhicules.

Des exemples de systèmes ACC sont divulgués dans FR3089926 A1, DE102011102429 A1 et DE102005007802 A1.

Le confort des passagers d'un véhicule est un autre facteur important, notamment pour l'acceptation des systèmes d'aide à la conduite des véhicules. Par exemple, une accélération ou une décélération trop importante est une cause d'inconfort pour les passagers d'un véhicule, notamment lorsque l'accélération est contrôlée par un système ACC. Des accélérations ou décélérations importantes sont parfois dues à des sélections ou désélections tardives du véhicule cible. Le compromis entre le confort et la sécurité des passagers est parfois difficile à trouver.

### Résumé de la présente invention

Un objet de la présente invention est de résoudre au moins l'un des problèmes de l'arrière-plan technologique décrit précédemment.

Un autre objet de la présente invention est d'améliorer le fonctionnement d'un système ACC d'un véhicule.

Selon un premier aspect, la présente invention concerne un procédé de contrôle d'un système de régulation adaptative de vitesse, dit système ACC, d'un premier véhicule, le procédé comprenant les étapes suivantes :
- détection d'un deuxième véhicule circulant devant le premier véhicule selon un sens de circulation du premier véhicule ;
- détermination d'un premier indicateur de pertinence associé au deuxième véhicule, le premier indicateur de pertinence étant représentatif d'une probabilité que le deuxième véhicule soit sur une première trajectoire du premier véhicule, la première trajectoire du premier véhicule étant déterminée à partir de premières données représentatives d'une voie de circulation sur laquelle circule le premier véhicule, les premières données étant obtenues d'une caméra embarquée dans le premier véhicule,
   le premier indicateur de pertinence étant déterminé en fonction d'une première information représentative d'une quantité de surface du deuxième véhicule couvrant la voie de circulation en fonction du temps et d'une deuxième information représentative de distance entre le premier véhicule et le deuxième véhicule ;
- détermination d'un deuxième indicateur de pertinence associé au deuxième véhicule, le deuxième indicateur de pertinence étant représentatif d'une probabilité que le deuxième véhicule soit sur une deuxième trajectoire du premier véhicule, la deuxième trajectoire du premier véhicule étant déterminée à partir de deuxièmes données dynamiques du premier véhicule,
   le deuxième indicateur de pertinence étant déterminé en fonction de troisièmes informations représentatives de positions du deuxième véhicule par rapport au premier véhicule en fonction du temps et d'une quatrième information représentative d'une vitesse latérale du deuxième véhicule en fonction du temps ;
- détermination d'un troisième indicateur de pertinence associé au deuxième véhicule en fonction du premier indicateur de pertinence et du deuxième indicateur de pertinence ;
- sélection du deuxième véhicule comme objet cible du système ACC selon une première fonction du troisième indicateur de pertinence.

Selon une variante, le procédé comprend en outre une désélection du deuxième véhicule comme objet cible selon une deuxième fonction du troisième indicateur de pertinence.

Selon une autre variante, la première fonction et la deuxième fonction forment une hystérésis.

Selon une variante supplémentaire, le deuxième véhicule est sélectionné comme objet cible pour toute valeur du deuxième indicateur de pertinence lorsque le premier indicateur de pertinence est supérieur à un seuil.

Selon encore une variante, le seuil est égal à 0.9.

Selon une variante additionnelle, les premières données correspondent à des données représentatives de marquage au sol.

Selon un deuxième aspect, la présente invention concerne un dispositif de contrôle d'un système de régulation adaptative de vitesse, dit système ACC, d'un véhicule, le dispositif comprenant une mémoire associée à un processeur configuré pour la mise en œuvre des étapes du procédé selon le premier aspect de la présente invention.

Selon un troisième aspect, la présente invention concerne un véhicule, par exemple de type automobile, comprenant un dispositif tel que décrit ci-dessus selon le deuxième aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de la présente invention ressortiront de la description des exemples de réalisation particuliers et non limitatifs de la présente invention ci-après, en référence aux figures 1 à 4 annexées, sur lesquelles :
[Fig. 1] illustre schématiquement un environnement routier dans lequel évoluent un premier véhicule et un deuxième véhicule, selon un exemple de réalisation particulier et non limitatif de la présente invention ;
[Fig. 2] illustre schématiquement un diagramme de sélection ou désélection d'un objet cible en fonction d'indicateurs de pertinence associé à l'objet cible déterminés par le premier véhicule de la figure 1, selon un exemple de réalisation particulier et non limitatif de la présente invention ;
[Fig. 3] illustre schématiquement un dispositif configuré pour contrôler un système de régulation adaptative de vitesse du premier véhicule de la figure 1, selon un exemple de réalisation particulier et non limitatif de la présente invention ;
[Fig. 4] illustre un organigramme des différentes étapes d'un procédé de contrôle d'un système de régulation adaptative de vitesse du premier véhicule de la figure 1, selon un exemple de réalisation particulier et non limitatif de la présente invention.

### Description des exemples de réalisation

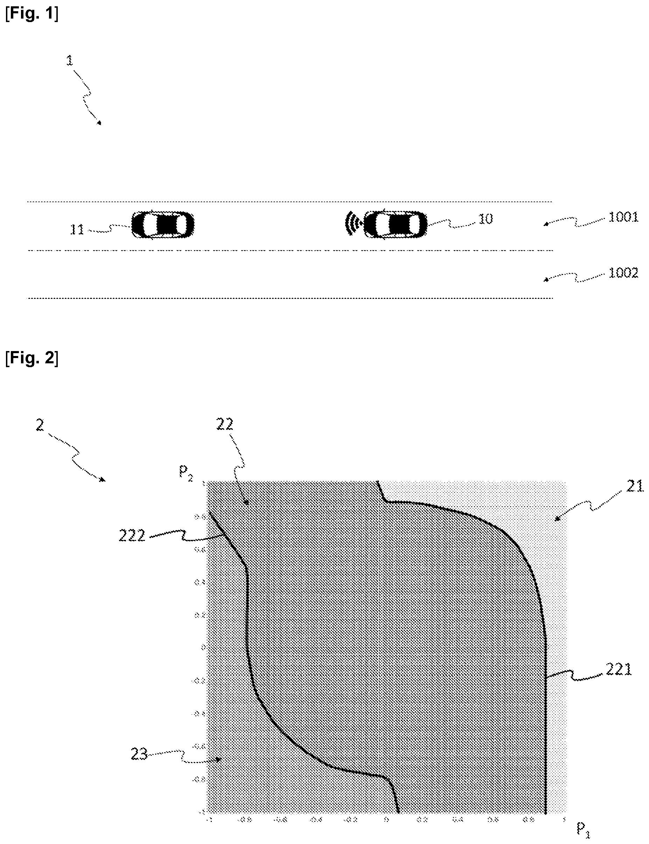

Un procédé et un dispositif de contrôle d'un système de régulation adaptative de vitesse d'un véhicule vont maintenant être décrits dans ce qui va suivre en référence conjointement aux figures 1 à 4. Des mêmes éléments sont identifiés avec des mêmes signes de référence tout au long de la description qui va suivre.

Selon un exemple particulier et non limitatif de réalisation de la présente invention, le contrôle d'un système de régulation adaptative de vitesse, dit système ACC, d'un premier véhicule suivant un deuxième véhicule comprend la détermination d'un premier indicateur de pertinence associé au deuxième véhicule et la détermination d'un deuxième indicateur de pertinence associé au deuxième véhicule.

La détermination du premier indicateur de pertinence est basée sur une première méthode de détermination de la trajectoire du premier véhicule basée sur la détection d'au moins une voie de circulation, le premier indicateur de pertinence étant déterminé en fonction de la part de l'empreinte au sol du deuxième véhicule couvrant la voie de circulation sur laquelle circule le premier véhicule et en fonction de la distance entre le premier véhicule et le deuxième véhicule.

La détermination du deuxième indicateur de pertinence est basée sur une deuxième méthode de détermination de la trajectoire du premier véhicule basée sur les paramètres dynamiques du premier véhicule, le deuxième indicateur de pertinence étant déterminé en fonction des positions du deuxième véhicule par rapport au premier véhicule (par exemple la distance latérale et la distance longitudinale entre les deux véhicules) en fonction du temps et en fonction de la vitesse latérale du deuxième véhicule.

Un troisième indicateur de pertinence du deuxième véhicule est déterminé à partir du premier et du deuxième indicateur, ce troisième indicateur permettant de sélectionner (ou désélectionner) le deuxième véhicule comme étant l'objet cible du système ACC.

L'indicateur de pertinence correspond par exemple à un facteur ou une valeur représentant la probabilité que le deuxième véhicule soit sur la trajectoire du premier véhicule, l'indicateur de pertinence permettant de décider si un objet mobile peut être qualifié d'objet cible du système ACC, par exemple à une échéance temporelle déterminée, par exemple à 1, 2, 3, 5 ou 10 secondes.

La prise en compte de deux indicateurs permet d'accélérer la sélection ou la désélection d'un objet mobile comme objet cible en améliorant la confiance dans l'indicateur de pertinence (qui est basé sur un arbitrage entre deux indicateurs calculés selon deux méthodes différentes). La prise en compte de deux indicateurs permet également selon les cas d'éviter une mauvaise sélection / désélection d'un objet mobile comme objet cible.

Une sélection plus rapide d'un objet cible ou une mauvaise désélection d'un objet cible permet d'améliorer le fonctionnement du système ACC avec par exemple une meilleure adaptation de la régulation de la vitesse du premier véhicule au bon objet cible, ce qui diminue les freinages et/ou les accélérations inutiles et trop importants.

La figure 1 illustre schématiquement un premier véhicule 10 suivant un deuxième véhicule 11 sur une portion de route d'un environnement 1, selon un exemple de réalisation particulier et non limitatif de la présente invention.

La figure 1 illustre un premier véhicule 10, par exemple un véhicule automobile, embarquant un ou plusieurs capteurs configurés pour détecter la présence d'objets dans l'environnement 1 du premier véhicule 10. Selon d'autres exemples, le premier véhicule 10 correspond à un car, un bus, un camion, un véhicule utilitaire ou une motocyclette, c'est-à-dire à un véhicule de type véhicule terrestre motorisé.

Le premier véhicule 10 correspond à un véhicule circulant sous la supervision totale d'un conducteur ou circulant dans un mode autonome ou semi-autonome. Le premier véhicule circule selon un niveau d'autonomie égale à 0 ou selon un niveau d'autonomie allant de 1 à 5 par exemple, selon l'échelle définie par l'agence fédérale américaine qui a établi 5 niveaux d'autonomie allant de 1 à 5, le niveau 0 correspondant à un véhicule n'ayant aucune autonomie, dont la conduite est sous la supervision totale du conducteur, le niveau 1 correspondant à un véhicule avec un niveau d'autonomie minimal, dont la conduite est sous la supervision du conducteur avec une assistance minimale d'un système ADAS, et le niveau 5 correspondant à un véhicule complètement autonome.

Selon l'exemple de la figure 1, le premier véhicule 10 circule sur une portion de route à deux voies de circulations 1001, 1002. Le premier véhicule 10 circule par exemple sur la voie de circulation de droite 1001, les deux voies de circulation 1001 et 1002 étant selon un même sens de circulation.

Selon l'exemple de la figure 1, le premier véhicule 10 suit un deuxième véhicule 11, à une distance déterminée et pouvant varier dans le temps (en fonction du comportement dynamique du premier véhicule 10 et du deuxième véhicule 11), le deuxième véhicule 11 circulant sur la même voie de circulation 1001 que le premier véhicule 10 et dans la même direction que le premier véhicule 10. Le deuxième véhicule 11 correspond par exemple à un véhicule circulant devant le premier véhicule 11 dans la même voie de circulation 1001 depuis une durée supérieure à un seuil, à un véhicule venant de se rabattre devant le premier véhicule 10 (par exemple suite à un rabattement de la voie de circulation 1002 vers la voie de circulation 1001) ou au contraire à un véhicule circulant sur la voie de circulation 1001 mais en cours de manœuvre pour se déplacer vers la voie de circulation 1002.

Un objet de la présente invention est par exemple de déterminer si le deuxième véhicule 11 doit rester l'objet cible du système ACC du premier véhicule 11 et/ou doit être sélectionner comme nouvel objet cible du système ACC. Cette détermination est obtenue en déterminant ou en calculant un indicateur de pertinence associé au deuxième véhicule, comme cela est expliqué ci-après selon au moins un exemple de réalisation particulier.

Le premier véhicule 10 embarque par exemple un ou plusieurs des capteurs suivants :
- un ou plusieurs radars à ondes millimétriques arrangés sur le premier véhicule 10, par exemple à l'avant, à l'arrière, sur chaque coin avant/arrière du véhicule ; chaque radar est adapté pour émettre des ondes électromagnétiques et pour recevoir les échos de ces ondes renvoyées par un ou plusieurs objets (par exemple le deuxième véhicule 11 situé devant le premier véhicule 10 selon l'exemple de la figure 1), dans le but de détecter des obstacles et leurs distances vis-à-vis du premier véhicule 10 ; et/ou
- un ou plusieurs LIDAR(s) (de l'anglais « Light Detection And Ranging », ou « Détection et estimation de la distance par la lumière » en français), un capteur LIDAR correspondant à un système optoélectronique composé d'un dispositif émetteur laser, d'un dispositif récepteur comprenant un collecteur de lumière (pour collecter la partie du rayonnement lumineux émis par l'émetteur et réfléchi par tout objet situé sur le trajet des rayons lumineux émis par l'émetteur) et d'un photodétecteur qui transforme la lumière collectée en signal électrique ; un capteur LIDAR permet ainsi de détecter la présence d'objets (par exemple le deuxième véhicule 11) situés dans le faisceau lumineux émis et de mesurer la distance entre le capteur et chaque objet détecté ; et/ou
- une ou plusieurs caméras (associées ou non à un capteur de profondeur) pour l'acquisition d'une ou plusieurs images de l'environnement autour du premier véhicule 10 se trouvant dans le champ de vision de la ou les caméras.

Les données obtenues de ce ou ces capteurs varient selon le type de capteur. Lorsqu'il s'agit d'un radar ou d'un LIDAR, les données correspondent par exemple à des données de distance entre des points de l'objet détecté et le capteur. Chaque objet détecté est ainsi représenté par un nuage de points (chaque point correspondant à un point de l'objet recevant le rayonnement émis par le capteur et réfléchissant au moins en partie ce rayonnement), le nuage de points représentant l'enveloppe (ou une partie de l'enveloppe) de l'objet détecté tel que vu par le capteur et in fine par le véhicule 10 embarquant le capteur. Lorsqu'il s'agit d'une caméra vidéo, les données correspondent à des données associées à chaque pixel de la ou les images acquises, par exemple des valeurs de niveaux de gris codés sur par exemple 8, 10, 12 ou plus de bits pour chaque canal couleur, par exemple RGB (de l'anglais « Red, Green, Blue » ou en français « Rouge, vert, bleu »). Ces données permettent par exemple de déterminer les positions successives prises par un objet se déplaçant dans l'environnement 1, par exemple le deuxième véhicule 11, et d'en déduire un ou plusieurs paramètres dynamiques de l'objet mobile tels que la vitesse et/ou l'accélération. Ces données permettent également de déterminer les lignes au sol pour par exemple participer à la détermination d'appartenance du deuxième véhicule 11 et du premier véhicule 10 à une même voie de circulation par exemple.

Les données acquises par le ou les capteurs embarqués alimentent par exemple un ou plusieurs systèmes d'aide à la conduite, dit ADAS (de l'anglais « Advanced Driver-Assistance System » ou en français « Système d'aide à la conduite avancé ») embarqués dans le premier véhicule 10. Un tel système ADAS est configuré pour assister, voire remplacer, le conducteur du premier véhicule 10 pour contrôler le premier véhicule 10 sur son parcours.

Selon un exemple, le premier véhicule 10 embarque un système ADAS correspondant à un système de régulation automatique de la vitesse, dit système ACC. Lorsque le système ACC est activé, le système ACC a pour objectif de réaliser une accélération de consigne, appelée A_{consigne}(t), qui varie au cours du temps 't' et qui permet de maintenir ou atteindre une vitesse de régulation et/ou de maintenir une distance de sécurité déterminée vis-à-vis du deuxième véhicule 11 en amont du premier véhicule 10, c'est à dire d'un véhicule cible circulant devant le premier véhicule 10 dans le même sens de circulation sur la même voie de circulation. Les données obtenues du ou des capteurs embarqués dans le premier véhicule 10 permettent au système ACC du premier véhicule 10 d'établir une valeur cible d'accélération A_{cible}(t) au cours du temps 't'. L'accélération cible A_{cible}(t) devient une consigne d'accélération A_{consigne}(t). Le système ACC ou un calculateur de ce système transmet par exemple les consignes d'accélérations A_{consigne}(t) qu'il a déterminé au(x) calculateur(s) supervisant le fonctionnement d'un groupe motopropulseur du premier véhicule 10, notamment pour que ce(s) dernier(s) détermine(nt) les consignes de couple à générer par le groupe motopropulseur pour respecter les consignes d'accélération A_{consigne}(t) et réguler la vitesse du premier véhicule 10.

Une valeur d'accélération cible est par exemple déterminée à un instant courant t₀ à partir d'un ensemble de données obtenues d'un ou plusieurs capteurs de détection d'objet embarqués dans le premier véhicule 10 et/ou de paramètres de consigne entrés par exemple par le conducteur ou déterminés à partir de données sur l'environnement du premier véhicule 10. La valeur d'accélération cible (exprimée en m.s⁻²) est par exemple calculée à partir de :
- données représentatives du comportement dynamique d'un véhicule cible correspondant par exemple au deuxième véhicule 11 (par exemple vitesse et/ou accélération), ces données étant par exemple obtenue à partir d'un ensemble de positions prises par le deuxième véhicule 11 sur un intervalle de temps précédant l'instant courant t₀ pour lequel est déterminée l'accélération cible. Les données sur les positions prises par le deuxième véhicule 11 sont avantageusement déterminées à partir des données reçues du ou des capteurs de détection d'objet embarqués dans le premier véhicule 10 ;
- données représentatives du comportement dynamique du premier véhicule 10 (par exemple vitesse, accélération, distance vis-à-vis du deuxième véhicule 11), ces données étant obtenues de capteurs embarqués dans le premier véhicule 10, la distance étant par exemple obtenue à partir des données reçues du ou des capteurs de détection d'objet ; et/ou
- paramètres de consignes fournis au système ACC, tels que par exemple une vitesse cible, une distance ou un temps inter-véhicule (DIV ou TIV) cible, ces paramètres étant enregistrés en mémoire, déterminés par analyse de l'environnement (par exemple la vitesse cible est déterminée par lecture des panneaux de limitation de vitesse ou à partir de données reçus d'un système de navigation) ou entrés par un utilisateur via une interface Homme-Machine, dite IHM.

Un processus de contrôle du système ACC du premier véhicule 10 suivant le deuxième véhicule 11 est avantageusement mis en œuvre par le premier véhicule 10, c'est-à-dire par un calculateur ou une combinaison de calculateurs du système embarqué du premier véhicule 10, par exemple par le ou les calculateurs en charge de contrôler le système ACC.

Dans une première opération, le premier véhicule 10 détecte la présence du deuxième véhicule 11 devant lui, par exemple à partir de données reçues d'un ou plusieurs des capteurs embarqués dans le premier véhicule 10 (par exemple radar, lidar et/ou caméra embarquée). Les données obtenues de ces capteurs permettent également de déterminer si besoin la distance entre les deux véhicules (et l'évolution de cette distance au cours du temps) ainsi que des données dynamiques du deuxième véhicule 11 (vitesse longitudinale et/ou latérale, accélération, etc.).

Dans une deuxième opération, un premier indicateur de pertinence associé au deuxième véhicule 11 est déterminé. Le premier indicateur de pertinence permet d'estimer ou correspond à la probabilité que le deuxième véhicule se trouve sur une première trajectoire du premier véhicule 10, cette première trajectoire étant déterminée selon une première méthode utilisant la détection de la ou les voies de circulation de la chaussée sur laquelle circule le premier véhicule 10 (méthode de type assignation d'une voie de circulation ou de type aide au maintien dans la voie de circulation).

La détection des voies de circulation 1001, 1002, et notamment de la voie de circulation 1001 dans laquelle se trouve le premier véhicule 10, est obtenue à partir de données reçues d'une ou plusieurs caméras embarquées dans le premier véhicule 10 et ayant dans leur champ de vision l'environnement situé devant le premier véhicule 10 selon le sens de circulation du premier véhicule 10.

La détection des voies se base par exemple sur la détection des marquages au sol matérialisant les bords des voies de circulation 1001, 1002 selon une méthode connue de l'homme du métier. Un exemple de traitement d'image pour détecter les lignes ou marquages au sol est par exemple décrit dans le document WO2017194890A1. Le système de détection de marquage au sol identifie par exemple les lignes en trait continu ou en trait pointillé.

Le premier indicateur de pertinence est déterminé ou calculé à partir de la part de la surface que le deuxième véhicule occupe sur le sol (aussi appelée empreinte au sol) associée à chaque voie de circulation, notamment à la voie de circulation 1001 correspondant à la trajectoire du premier véhicule 10. Le premier indicateur de pertinence est par exemple calculé sur une durée déterminée, qui dépend par exemple de la distance entre le premier véhicule 10 et le deuxième véhicule 11 (par exemple plus la distance est grande plus la durée prise en compte sera importante).

Le premier indicateur de pertinence est ainsi fonction d'une première information représentative d'une quantité de surface du deuxième véhicule couvrant la voie de circulation 1001 (en fonction du temps, c'est-à-dire selon une durée déterminée en fonction par exemple de la distance entre le premier et le deuxième véhicule) et d'une deuxième information représentative de distance entre le premier véhicule et le deuxième véhicule.

Par exemple, si la distance entre le premier véhicule 10 et le deuxième véhicule 11 est inférieure à une valeur seuil (par exemple inférieure à 50, 100 ou 150 m), alors la durée d'évaluation de l'empreinte au sol du deuxième véhicule 11 est égale à 1 seconde (ou 2 secondes selon un autre exemple).

Si la distance entre le premier véhicule 10 et le deuxième véhicule 11 est supérieure à la valeur seuil, alors la durée d'évaluation de l'empreinte au sol du deuxième véhicule 11 est par exemple égale à 3, 5, 7 ou 10 secondes, par exemple selon la distance, la durée augmentant avec la distance.

Par ailleurs, si la part de la surface correspondant à l'empreinte au sol du deuxième véhicule qui couvre la voie de circulation 1001 correspondant à la première trajectoire du premier véhicule 10 est supérieure à une valeur seuil (par exemple supérieure à 90, 95 ou 98 %), alors le premier indicateur de pertinence a une valeur supérieure à 0.9 par exemple (le premier indicateur de pertinence étant par exemple compris entre -1 et 1, -1 correspondant à la probabilité la plus faible que le deuxième véhicule se trouve sur la première trajectoire et 1 correspondant à la probabilité la plus forte que le deuxième véhicule 11 se trouve sur la première trajectoire).

Ainsi, plus le part du deuxième véhicule dans la voie de circulation 1001 est grande, plus la valeur du premier indicateur de pertinence est élevée.

La part ou le pourcentage du deuxième véhicule dans la voie de circulation 1001 est par exemple obtenu par un procédé de détermination de la répartition surfacique du deuxième véhicule 11 détecté sur les voies de circulation 1001, 1002 en fonction de la position relative d'au moins un point d'intérêt du deuxième véhicule 11 détecté par rapport à la représentation géométrique d'un bord de voie de circulation.

Chaque bord de voie de circulation 1001, 1002 est par exemple représenté par un polynôme, par exemple de degré 3, de la forme : y = ax³ + bx² + cx +d, avec a, b, c et d les coefficients du pôlynome.

Une répartition surfacique du deuxième véhicule 11 sur les voies de circulation 1001, 1002 est déterminée en fonction par exemple de points d'intérêts (par exemple le point arrière gauche et le point arrière droit) du deuxième véhicule 11 et de la représentation géométrique d'un bord de voie de circulation.

Les points d'intérêt du deuxième véhicule 11 est par exemple déterminé sur la base de dimensions du deuxième véhicule 11 et de l'angle θ formé entre l'axe longitudinal du deuxième véhicule 11 et l'axe longitudinal du premier véhicule 10.

L'intersection, si elle existe, entre un bord de voie de circulation et un segment ayant pour extrémité deux points d'intérêt du deuxième véhicule 11 permet par exemple de déterminer si le deuxième véhicule 11 est à cheval sur deux voies de circulation ou non.

Les points d'intérêt du deuxième véhicule et les bords de voies de circulation permettent ainsi de déterminer dans quelle voie se trouve le deuxième véhicule 11, et, s'il se trouve sur deux voies de circulation (lors d'un changement de voie), quelle est la part du deuxième véhicule dans une première voie et quelle est la part du deuxième véhicule dans une deuxième voie adjacente à la première voie et séparée de la première voie par un bord.

Une telle méthode permet ainsi de déterminer quel pourcentage du deuxième véhicule 11 se trouve dans la voie de circulation 1001 correspondant à la première trajectoire.

11 (vitesse longitudinale et/ou latérale, accélération, etc.).

Dans une troisième opération, un deuxième indicateur de pertinence associé au deuxième véhicule 11 est déterminé. Le deuxième indicateur de pertinence permet d'estimer ou correspond à la probabilité que le deuxième véhicule se trouve sur une deuxième trajectoire du premier véhicule 10, cette deuxième trajectoire étant déterminée selon une deuxième méthode utilisant les paramètres dynamiques du premier véhicule 10, par exemple l'accélération latérale du premier véhicule 10.

Le deuxième indicateur de pertinence est alors déterminé en fonction des positions prises par le deuxième véhicule 11 par rapport au premier véhicule 10, par exemple sur une durée déterminée, laquelle durée dépend de la vitesse latérale du deuxième véhicule 11. Par exemple, plus la valeur de la vitesse latérale du deuxième véhicule 11 est grande, plus la durée de prise en compte des positions successives du deuxième véhicule 11 pour calculer le deuxième indicateur est grande.

Sur un intervalle de temps compris entre tᵢₙᵢₜᵢₐₗ et t_{final} de durée égale à la durée détermine, le deuxième indicateur de pertinence est calculé à différents instants (par exemple à intervalles réguliers) en prenant en outre en compte les deuxièmes indicateurs calculés précédemment depuis tᵢₙᵢₜᵢₐₗ.

Cela permet d'obtenir à la fin de l'intervalle de temps, c'est-à-dire à t_{final}, une valeur pour le deuxième indicateur qui a pris en compte tous les deuxièmes indicateurs calculés pendant l'intervalle, c'est-à-dire pour l'ensemble de positions prises par le deuxième véhicule 11 par rapport au premier véhicule 10 pendant l'intervalle de temps.

Une telle méthode de détermination du deuxième indicateur de pertinence est par exemple décrite dans le document de brevet FR3 089 926 publié le 19 juin 2020. Dans ce document, l'indicateur de pertinence est appelé indicateur de pertinence consolidé.

Dans une quatrième opération, un troisième indicateur de pertinence associé au deuxième véhicule est déterminé en fonction du premier indicateur de pertinence et du deuxième indicateur de pertinence. Le troisième indicateur de pertinence est par exemple le résultat d'un arbitrage entre le premier indicateur et le deuxième indicateur. Le troisième indicateur correspond à un indicateur d'un ensemble de troisièmes indicateurs, chaque troisième indicateur de l'ensemble correspondant à un couple de valeurs comprenant un premier indicateur et un deuxième indicateur.

Une matrice ou un diagramme à deux dimensions représentant l'ensemble des couples de valeurs correspondant à l'ensemble de troisièmes indicateurs est par exemple illustré sur la figure 2, avec en abscisse le premier indicateur de pertinence et en ordonné le deuxième indicateur de pertinence.

Dans une cinquième opération, le deuxième véhicule 11 est sélectionné ou non pour devenir l'objet cible du système ACC selon une première fonction du troisième indicateur de pertinence associé au deuxième véhicule et déterminé à la quatrième opération. Un exemple d'une telle première fonction est illustré sur la figure 2.

Selon une variante, lorsque le deuxième véhicule 11 correspond déjà à l'objet cible utilisé par le système ACC, le deuxième véhicule 11 est conservé comme objet cible ou est désélectionné selon une deuxième fonction du troisième indicateur de pertinence associé au deuxième véhicule et déterminé à la quatrième opération. Un exemple d'une telle deuxième fonction est illustré sur la figure 2.

L'arbitrage réalisé entre le premier indicateur et le deuxième indicateur (ou dit autrement selon la première méthode et la deuxième méthode) permet par exemple :
- d'accélérer la sélection d'un objet cible (par exemple lorsque le premier indicateur et le deuxième indicateur concordent, c'est-à-dire lorsqu'ils ont tous les deux une valeur élevée ou supérieure à un seuil, par exemple supérieure à 0.8 ou 0.9) ; et/ou
- d'accélérer la désélection d'un objet cible (par exemple lorsque le premier indicateur et le deuxième indicateur concordent, c'est-à-dire lorsqu'ils ont tous les deux une valeur faible ou inférieure à un seuil, par exemple inférieure à -0.8 ou -0.9) ; et/ou
- de prendre en considération en priorité un des indicateurs ou uniquement un des indicateurs, par exemple le premier indicateur, lorsque ce dernier est supérieur à un seuil, par exemple supérieur à 0.9.

La figure 2 illustre schématiquement un diagramme 2 de sélection ou désélection d'un objet cible en fonction des premiers et deuxièmes indicateurs de pertinence associé à un objet mobile tel que le deuxième véhicule 11, selon un exemple de réalisation particulier et non limitatif de la présente invention.

Le diagramme 2 représente par exemple un ensemble de points correspondant chacun à un troisième indicateur ayant pour abscisse une valeur de premier indicateur de pertinence P₁ comprise entre -1 et 1 et pour ordonnées une valeur de deuxième indicateur de pertinence P₂ comprise entre -1 et 1.

Le diagramme 2 comprend trois zones 21, 22, 23. La première zone 21 comprend les troisièmes indicateurs pour lesquels un objet mobile (typiquement un véhicule) ayant un tel troisième indicateur de pertinence associé est sélectionné comme objet cible du système ACC. La deuxième zone 22 correspond à une zone de transition entre la première zone 21 et la troisième zone 23. La troisième zone 23 comprend les troisièmes indicateurs pour lesquels un objet mobile (typiquement un véhicule) ayant un tel troisième indicateur de pertinence associé est désélectionné comme objet cible du système ACC, c'est-à-dire qu'il ne peut pas devenir un objet cible, ou s'il était un objet cible, il est désélectionné pour ne plus être un objet cible du système ACC.

La première zone 21 est séparée de la deuxième zone 22 via une première limite 221 correspondant à une première fonction de P₁ et P₂, cette première fonction étant utilisée pour déterminer si un objet mobile peut être sélectionné ou non comme objet cible en fonction du troisième indicateur associé à cet objet mobile.

Comme cela apparait sur la figure 2, lorsque la valeur du premier indicateur P1 est supérieure à un seuil (par exemple 0.9 selon l'exemple de la figure 2), alors un objet mobile ayant une telle première valeur de pertinence P₁ est sélectionné pour devenir l'objet cible du système ACC, quelle que soit la valeur du deuxième indicateur de pertinence P₂. A contrario, il n'existe pas de tel seuil pour le deuxième indicateur de pertinence P2 pour la sélection d'un objet mobile comme objet cible. Cela signifie que lorsque la détermination d'un objet cible se base sur la méthode basée sur la détection des voies de circulation (première méthode), si le premier indicateur de pertinence associé dépasse la valeur seuil, alors l'objet mobile devient objet mobile quel que soit le résultat de la méthode basé sur la trajectoire déterminée à partir des paramètres dynamiques (deuxième méthode). L'arbitrage prend de préférence en compte le résultat de la première méthode lorsque la valeur du premier indicateur de pertinence P₁ dépasse un seuil, par exemple 0.85, 0.9 ou 0.95.

La deuxième zone 22 est séparée de la troisième zone 23 via une deuxième limite 222 correspondant à une deuxième fonction de P₁ et P₂, cette deuxième fonction étant utilisée pour déterminer si un objet mobile doit être désélectionné pour ne plus être ou ne pas devenir un objet cible du système ACC.

Comme cela apparait sur la figure 2, la première fonction 221 et la deuxième fonction 222 forment une hystérésis en ce que les limites ou seuils pour sélectionner un objet cible sont différentes des limites ou seuils pour désélectionner un objet cible, c'est-à-dire que ces limites suivent des fonctions différentes.

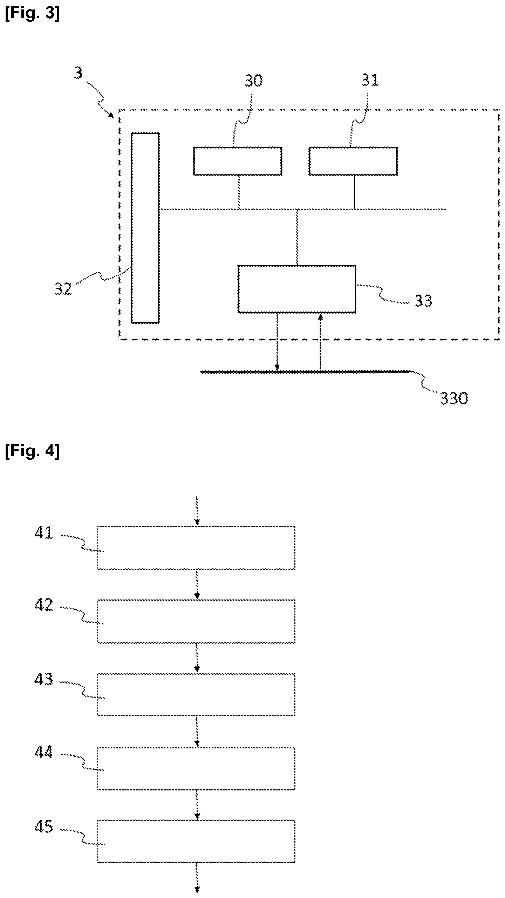

La figure 3 illustre schématiquement un dispositif 3 configuré pour contrôler le système ACC d'un véhicule, par exemple du premier véhicule 10, selon un exemple de réalisation particulier et non limitatif de la présente invention. Le dispositif 3 correspond par exemple à un dispositif embarqué dans le premier véhicule 10, par exemple un calculateur.

Le dispositif 3 est par exemple configuré pour la mise en œuvre des opérations décrites en regard des figures 1 à 2 et/ou des étapes du procédé décrit en regard de la figure 4. Des exemples d'un tel dispositif 3 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 3, individuellement ou en combinaison, peuvent être intégrés dans un unique circuit intégré, dans plusieurs circuits intégrés, et/ou dans des composants discrets. Le dispositif 3 peut être réalisé sous la forme de circuits électroniques ou de modules logiciels (ou informatiques) ou encore d'une combinaison de circuits électroniques et de modules logiciels.

Le dispositif 3 comprend un (ou plusieurs) processeur(s) 30 configurés pour exécuter des instructions pour la réalisation des étapes du procédé et/ou pour l'exécution des instructions du ou des logiciels embarqués dans le dispositif 3. Le processeur 30 peut inclure de la mémoire intégrée, une interface d'entrée/sortie, et différents circuits connus de l'homme du métier. Le dispositif 3 comprend en outre au moins une mémoire 31 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 31.

Selon différents exemples de réalisation particuliers et non limitatifs, le dispositif 3 est couplé en communication avec d'autres dispositifs ou systèmes similaires (par exemple d'autres calculateurs) et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 3 comprend un bloc 32 d'éléments d'interface pour communiquer avec des dispositifs externes. Les éléments d'interface du bloc 32 comprennent une ou plusieurs des interfaces suivantes :
- interface radiofréquence RF, par exemple de type Wi-Fi^{®} (selon IEEE 802.11), par exemple dans les bandes de fréquence à 2,4 ou 5 GHz, ou de type Bluetooth^{®} (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Selon un autre exemple de réalisation particulier et non limitatif, le dispositif 3 comprend une interface de communication 33 qui permet d'établir une communication avec d'autres dispositifs (tels que d'autres calculateurs du système embarqué) via un canal de communication 330. L'interface de communication 33 correspond par exemple à un transmetteur configuré pour transmettre et recevoir des informations et/ou des données via le canal de communication 330. L'interface de communication 33 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 3 peut fournir des signaux de sortie à un ou plusieurs dispositifs externes, tels qu'un écran d'affichage, tactile ou non, un ou des haut-parleurs et/ou d'autres périphériques (système de projection) via des interfaces de sortie respectives. Selon une variante, l'un ou l'autre des dispositifs externes est intégré au dispositif 3.

La figure 4 illustre un organigramme des différentes étapes d'un procédé de contrôle d'un système ACC d'un véhicule, par exemple du premier véhicule 10, selon un exemple de réalisation particulier et non limitatif de la présente invention. Le procédé est par exemple mis en œuvre par un dispositif embarqué dans le premier véhicule 10 ou par le dispositif 3 de la figure 3.

Dans une première étape 41, un deuxième véhicule est détecté, le deuxième véhicule circulant devant le premier véhicule selon un sens de circulation du premier véhicule.

Dans une deuxième étape 42, un premier indicateur de pertinence associé au deuxième véhicule est déterminé. Le premier indicateur de pertinence est représentatif d'une probabilité que le deuxième véhicule soit sur une première trajectoire du premier véhicule, la première trajectoire du premier véhicule étant déterminée à partir de premières données représentatives d'une voie de circulation sur laquelle circule le premier véhicule, les premières données étant obtenues d'une caméra embarquée dans le premier véhicule. Le premier indicateur de pertinence est déterminé en fonction d'une première information représentative d'une quantité de surface du deuxième véhicule couvrant la voie de circulation en fonction du temps et d'une deuxième information représentative de distance entre le premier véhicule et le deuxième véhicule.

Dans une troisième étape 43, un deuxième indicateur de pertinence associé au deuxième véhicule est déterminé. Le deuxième indicateur de pertinence est représentatif d'une probabilité que le deuxième véhicule soit sur une deuxième trajectoire du premier véhicule, la deuxième trajectoire du premier véhicule étant déterminée à partir de deuxièmes données dynamiques du premier véhicule. Le deuxième indicateur de pertinence est déterminé en fonction de troisièmes informations représentatives de positions du deuxième véhicule par rapport au premier véhicule en fonction du temps et d'une quatrième information représentative d'une vitesse latérale du deuxième véhicule en fonction du temps.

Dans une quatrième étape 44, un troisième indicateur de pertinence associé au deuxième véhicule est déterminé en fonction du premier indicateur de pertinence et du deuxième indicateur de pertinence.

Dans une cinquième étape 45, une sélection du deuxième véhicule comme objet cible du système ACC selon une première fonction du troisième indicateur de pertinence est mise en œuvre.

Selon une variante, les variantes et exemples des opérations décrits en relation avec la figure 1 et/ou 2 s'appliquent aux étapes du procédé de la figure 4.

La présente invention concerne également un système de régulation adaptative de vitesse pour véhicule comprenant le dispositif 3 de la figure 3.

La présente invention concerne également un véhicule, par exemple automobile ou plus généralement un véhicule autonome à moteur terrestre, comprenant le dispositif 3 de la figure 3 ou le système de régulation adaptative de vitesse pour véhicule ci-dessus.

## Revendications

1. Procédé de contrôle d'un système de régulation adaptative de vitesse, dit système ACC, d'un premier véhicule (10), ledit procédé comprenant les étapes suivantes :
- détection (41) d'un deuxième véhicule (11) circulant devant ledit premier véhicule (10) selon un sens de circulation dudit premier véhicule (10) ;
- détermination (42) d'un premier indicateur de pertinence associé audit deuxième véhicule (11), ledit premier indicateur de pertinence étant représentatif d'une probabilité que ledit deuxième véhicule (11) soit sur une première trajectoire dudit premier véhicule (10), ladite première trajectoire du premier véhicule (10) étant déterminée à partir de premières données représentatives d'une voie de circulation (1001) sur laquelle circule ledit premier véhicule (10), lesdites premières données étant obtenues d'une caméra embarquée dans ledit premier véhicule (10),
ledit premier indicateur de pertinence étant déterminé en fonction d'une première information représentative d'une quantité de surface dudit deuxième véhicule (11) couvrant ladite voie de circulation (1001) en fonction du temps et d'une deuxième information représentative de distance entre le premier véhicule (10) et ledit deuxième véhicule (11) ;
- détermination (43) d'un deuxième indicateur de pertinence associé audit deuxième véhicule (11), ledit deuxième indicateur de pertinence étant représentatif d'une probabilité que ledit deuxième véhicule (11) soit sur une deuxième trajectoire dudit premier véhicule (10), ladite deuxième trajectoire du premier véhicule étant déterminée à partir de deuxièmes données dynamiques dudit premier véhicule (10),
ledit deuxième indicateur de pertinence étant déterminé en fonction de troisièmes informations représentatives de positions dudit deuxième véhicule (11) par rapport audit premier véhicule (10) en fonction du temps et d'une cinquième information représentative d'une vitesse latérale dudit deuxième véhicule (11) ;
- détermination (44) d'un troisième indicateur de pertinence associé audit deuxième véhicule (11) en fonction dudit premier indicateur de pertinence et dudit deuxième indicateur de pertinence ;
- sélection (45) dudit deuxième véhicule (11) comme objet cible dudit système ACC selon une première fonction dudit troisième indicateur de pertinence.

2. Procédé selon la revendication 1, comprenant en outre une désélection dudit deuxième véhicule (11) comme objet cible selon une deuxième fonction dudit troisième indicateur de pertinence.

3. Procédé selon la revendication 2, pour lequel ladite première fonction et ladite deuxième fonction forment une hystérésis.

4. Procédé selon l'une des revendications 1 à 3, pour lequel ledit deuxième véhicule (11) est sélectionné comme objet cible pour toute valeur dudit deuxième indicateur de pertinence lorsque ledit premier indicateur de pertinence est supérieur à un seuil.

5. Procédé selon la revendication 4, pour lequel ledit seuil est égal à 0.9.

6. Procédé selon l'une des revendications 1 à 5, pour lequel lesdites premières données correspondent à des données représentatives de marquage au sol.

7. Programme d'ordinateur comportant des instructions pour la mise en œuvre du procédé selon l'une quelconque des revendications précédentes, lorsque ces instructions sont exécutées par un processeur.

8. Support d'enregistrement lisible par un ordinateur sur lequel est enregistré un programme d'ordinateur comprenant des instructions pour l'exécution des étapes du procédé selon l'une des revendications 1 à 6.

9. Dispositif (3) de contrôle d'un système de régulation adaptative de vitesse, dit système ACC, d'un premier véhicule (10), ledit dispositif (3) comprenant une mémoire (31) associée à au moins un processeur (30) configuré pour la mise en œuvre des étapes du procédé selon l'une quelconque des revendications 1 à 6.

10. Véhicule (10) comprenant le dispositif (3) selon la revendication 9.

## Patentansprüche

1. Verfahren zur Steuerung eines ACC-Systems eines ersten Fahrzeugs (10), wobei das Verfahren die folgenden Schritte umfasst:
- Detektion (41) eines zweiten Fahrzeugs (11), das in einer Fahrtrichtung des ersten Fahrzeugs (10) vor dem ersten Fahrzeug (10) fährt;
- Bestimmung (42) eines ersten Relevanzindikators, der dem zweiten Fahrzeug (11) zugeordnet ist, wobei der erste Relevanzindikator repräsentativ für eine Wahrscheinlichkeit ist, dass das zweite Fahrzeug (11) auf einer ersten Bahn des ersten Fahrzeugs (10) ist, wobei die erste Bahn des ersten Fahrzeugs (10) aus ersten Daten bestimmt wird, die repräsentativ für eine Fahrspur (1001) sind, auf der das erste Fahrzeug (10) fährt, wobei die ersten Daten von einer Kamera in dem ersten Fahrzeug (10) erhalten werden,
der erste Relevanzindikator wird in Abhängigkeit von einer ersten Information bestimmt, die repräsentativ ist für eine Oberflächenmenge des zweiten Fahrzeugs (11), die die Fahrspur (1001) in Abhängigkeit von der Zeit abdeckt, und einer zweiten Information, die repräsentativ ist für den Abstand zwischen dem ersten Fahrzeug (10) und dem zweiten Fahrzeug (11);
- Bestimmung (43) eines zweiten Relevanzindikators, der dem zweiten Fahrzeug (11) zugeordnet ist, wobei der zweite Relevanzindikator repräsentativ für eine Wahrscheinlichkeit ist, dass das zweite Fahrzeug (11) auf einer zweiten Bahn des ersten Fahrzeugs (10) ist, wobei die zweite Bahn des ersten Fahrzeugs aus zweiten dynamischen Daten des ersten Fahrzeugs (10) bestimmt wird,
der zweite Relevanzindikator wird in Abhängigkeit von dritten Informationen bestimmt, die für die Positionen des zweiten Fahrzeugs (11) in Bezug auf das erste Fahrzeug (10) in Abhängigkeit von der Zeit repräsentativ sind, und in Abhängigkeit von einer fünften Information, die für die Seitengeschwindigkeit des zweiten Fahrzeugs (11) repräsentativ ist;
- Bestimmung (44) eines dritten Relevanzindikators, der dem zweiten Fahrzeug (11) zugeordnet ist, in Abhängigkeit von dem ersten Relevanzindikator und dem zweiten Relevanzindikator;
- Auswahl (45) des zweiten Fahrzeugs (11) als Zielobjekt des ACC-Systems gemäß einer ersten Funktion des dritten Relevanzindikators.

2. Verfahren nach Anspruch 1, das des Weiteren das Abwählen des zweiten Fahrzeugs (11) als Zielobjekt gemäß einer zweiten Funktion des dritten Relevanzindikators umfasst.

3. Verfahren nach Anspruch 2, wobei die erste Funktion und die zweite Funktion eine Hysterese bilden.

4. Verfahren nach einem der Ansprüche 1 bis 3, bei dem das zweite Fahrzeug (11) als Zielobjekt für jeden Wert des zweiten Relevanzindikators ausgewählt wird, wenn der erste Relevanzindikator größer als ein Schwellenwert ist.

5. Verfahren nach Anspruch 4, wobei der Schwellenwert 0,9 beträgt.

6. Verfahren nach einem der Ansprüche 1 bis 5, bei dem die ersten Daten repräsentativen Bodenmarkierungsdaten entsprechen.

7. Computerprogramm mit Anweisungen zur Durchführung des Verfahrens nach einem der vorhergehenden Ansprüche, wenn diese Anweisungen von einem Prozessor ausgeführt werden.

8. Computerlesbares Aufzeichnungsmedium, auf dem ein Computerprogramm aufgezeichnet ist, das Befehle zum Ausführen der Schritte des Verfahrens nach einem der Ansprüche 1 bis 6 umfasst.

9. Vorrichtung (3) zur Steuerung eines adaptiven Geschwindigkeitsregelungssystems, ACC-System, eines ersten Fahrzeugs (10), wobei die Vorrichtung (3) einen Speicher (31) umfasst, der mit mindestens einem Prozessor (30) verbunden ist, der zur Durchführung der Schritte des Verfahrens nach einem der Ansprüche 1 bis 6 konfiguriert ist.

10. Fahrzeug (10) mit der Vorrichtung (3) nach Anspruch 9.

## Claims

1. A method for controlling an adaptive speed control system, referred to as an ACC system, of a first vehicle (10), said method comprising the following steps:
- detection (41) of a second vehicle (11) travelling in front of said first vehicle (10) according to a circulation direction of said first vehicle (10);
- determining (42) a first relevance indicator associated with said second vehicle (11), said first relevance indicator being representative of a probability that said second vehicle (11) is on a first trajectory of said first vehicle (10), said first trajectory of the first vehicle (10) being determined from first data representative of a taxiway (1001) on which said first vehicle (10) is travelling, said first data being obtained from a camera on board said first vehicle (10),
said first relevance indicator being determined as a function of a first piece of information representative of a surface quantity of said second vehicle (11) covering said taxiway (1001) as a function of time and of a second piece of information representative of distance between the first vehicle (10) and said second vehicle (11);
- determining (43) a second relevance indicator associated with said second vehicle (11), said second relevance indicator being representative of a probability that said second vehicle (11) is on a second trajectory of said first vehicle (10), said second trajectory of the first vehicle being determined from second dynamic data of said first vehicle (10),
said second relevance indicator being determined as a function of third information representative of positions of said second vehicle (11) by report to said first vehicle (10) as a function of time and of a fifth information representative of a lateral speed of said second vehicle (11);
- determination (44) of a third relevance indicator associated with said second vehicle (11) according to said first relevance indicator and said second relevance indicator;
- selecting (45) said second vehicle (11) as a target object of said ACC system according to a first function of said third relevance indicator.

2. Method according to claim 1, further comprising deselecting said second vehicle (11) as a target object according to a second function of said third relevance indicator.

3. Method according to claim 2, wherein said first function and said second function form a hysteresis.

4. Method according to one of claims 1 to 3, for which the said second vehicle (11) is selected as the target object for any value of the said second relevance indicator when the said first relevance indicator is greater than a threshold.

5. Method according to claim 4, for which said threshold is equal to 0.9.

6. Method according to one of claims 1 to 5, for which the said first data correspond to data representative of marking on the ground.

7. A computer Plan including instructions for implementing the method according to any one of the previous claims, when these instructions are executed by a processor.

8. Computer-readable recording medium on which a computer plan is recorded, comprising instructions for executing the steps of the method according to one of claims 1 to 6.

9. Device (3) for controlling an adaptive speed regulation system, called an ACC system, of a first vehicle (10), said device (3) comprising a memory (31) associated with at least one processor (30) configured for implementing the steps of the method according to any one of claims 1 to 6.

10. Vehicle (10) comprising the device (3) according to claim 9.
